# EUROPEAN PATENT SPECIFICATION

(11) **EP 1 937 517 B1**
(45) Date of publication and mention of the grant of the patent: **10.08.2011**
(21) Application number: 06808984.6
(22) Date of filing: 10.10.2006
(51) Int. Cl.: B60R 21/231, B60R 21/233

(54) **AIR BAG SYSTEM WITH INFLATABLE TUBULAR INNER STRUCTURE**
AIRBAGSYSTEM MIT AUFBLASBARER INNEREN SCHLAUCHSTRUKTUR
SYSTEME DE COUSSIN DE SECURITE GONFLABLE POURVU D'UNE STRUCTURE INTERIEURE TUBULAIRE GONFLABLE

(30) Priority: 17.10.2005 JP 2005302060
(43) Date of publication of application: 02.07.2008
(60) Divisional application: 10195769.4
(73) Proprietor: TOYOTA JIDOSHA KABUSHIKI KAISHA, Toyota-shi, Aichi-ken, 471-8571 (JP)
(72) Inventor: FUKAWATASE, Osamu, Aichi-ken, 471-8571 (JP)
(74) Representative: Winter, Brandl, Fürniss, Hübner, Röss, Kaiser, Polte - Partnerschaft
(86) International application number: PCT/IB2006/002819
(87) International publication number: WO 2007/045952

(56) References cited:
- DE-A1- 2 406 501
- DE-A1- 4 126 743
- US-A- 3 675 942
- US-A- 3 883 154
- US-A- 3 970 328
- US-A- 5 489 117
- US-A1- 2004 155 440
- US-A1- 2004 164 535

## Description

### BACKGROUND OF THE INVENTION

### 1. Field of the Invention

The present invention relates to an air bag system for inflating and deploying an air bag at a predetermined moment to restrain an occupant.

### 2. Description of the Related Art

With regard to passenger-side air bag systems, a technology for realizing the common use of inflators by fixing the volume of air bags of which the dimensions are different depending on car models by providing the air bag with a through portion having a predetermined size is available (see Japanese Patent Application Publication No. 2002-166805). With regard to this technology, the through portion is provided in a gas flow path portion, which is positioned between an inflator and an occupant restraining portion in the air bag, and spreads over an upper surface of an instrument panel when the air bag is inflated and deployed.

However, it has been difficult to further reduce the volume of the passenger-side air bag for restraining the head, the chest and the belly of an occupant by using the above-described air bag system.
An airbag system according to the preamble of claim 1 is known from US 5,489,117 A.

### SUMMARY OF THE INVENTION

An object of the present invention is to provide an air bag system with which it is possible to reduce the volume of an air bag.

A first aspect of the present invention relates to an air bag system including a gas generator that is activated to generate gas at a predetermined moment, and an air bag that is inflated and deployed by the gas supplied from the gas generator. In this air bag system, the air bag has a tubular skeleton-forming portion that is placed in the air bag, and that is inflated by the gas supplied from the gas generator to form a skeleton portion.

With regard to the above air bag system, the gas from the gas generator is supplied to the skeleton-forming portion of the air bag when the gas generator is activated at a predetermined moment, such as at the time of vehicle collision or at the time of rollover. The air bag is inflated and deployed as a whole to restrain an occupant when the skeleton-forming portion is inflated to form the tubular skeleton portion. Accordingly, the air bag is deployed when the gas is supplied to the tubular skeleton-forming portion placed in the air bag, so that it is possible to reduce the amount of gas to be supplied to the air bag to deploy the air bag into a predetermined form.

Thus, it is possible to reduce the volume of the air bag by using the above air bag system.

In the above air bag system, the skeleton-forming portion may be placed along a surface of the air bag.

With regard to this air bag system, because the skeleton-forming portion is inflated to form the skeleton portion, the air bag is inflated and deployed while pressure is applied directly to the periphery. Accordingly, it is possible to easily deploy the air bag into a desired form with the use of a smaller amount of gas.

In the above air bag system, the skeleton-forming portion may include a portion that is inflated by the gas supplied from the gas generator to form the skeleton portion that has a lattice shape.

With regard to this air bag system, at least part of the skeleton portion forms a lattice shape when the air bag is inflated and deployed, so that it is possible to effectively restrain an occupant with the use of the volume-reduced air bag. The lattice shape includes an X shape, and a shape in which a plurality of skeleton portions are extended from corresponding predetermined points.

In the above air bag system, the skeleton-forming portion may include a portion that is inflated by the gas supplied from the gas generator to form a plurality of the skeleton portions that have a columnar shape, and extend in a substantially vertical direction with respect to a vehicle body.

With regard to this air bag system, the skeleton portion is constituted of a plurality of columnar portions extending in a substantially vertical direction with respect to the vehicle body, so that the gas inflow path is simple, and it is possible to deploy the air bag within a short period of time.

In the above air bag system, the air bag may be inflated and deployed in front of an occupant in terms of the front and the rear of the vehicle body, and may include: an occupant contact portion that is deployed toward the occupant when the skeleton-forming portion placed on an inside of the air bag is inflated to form the skeleton portion; and a pair of side wall portions that are deployed between the gas generator and each edge of the occupant contact portion in the vehicle width direction when the skeleton-forming portion placed on the inside of the air bag is inflated to form the skeleton portion.

With regard to this air bag system, a pair of the side wall portions are deployed from the gas generator side toward the rear in terms of the front and the rear of the vehicle body, and the occupant contact portion is deployed between rear edges of the pair of side wall portions. Specifically, in the deployed air bag, the area surrounded by the pair of side wall portions, and the occupant contact portion is a cavity. The pair of side wall portions and the occupant contact portion allows the air bag to be inflated and deployed that is given its form when the skeleton-forming portions thereof are inflated to form the skeleton portions. Accordingly, it is possible to effectively restrain the head, the chest and the belly of an occupant with the use of the volume-reduced air bag.

In the above air bag system, the air bag may include a pair of gas supply ports allowing the pair of side wall portions to communicate with the gas generator individually.

With regard to this air bag system, the gas from the gas generator flows into the occupant contact portion from the gas supply ports through the corresponding side wall portions. Thus, it is possible to inflate and deploy the air bag, in which the area surrounded by the pair of side wall portions, and the occupant contact portion is a cavity, in a balanced manner within a short period of time.

In the above air bag system, the air bag may include: an upper wall portion that connects the gas generator and an upper edge of the occupant contact portion in a vertical direction with respect to the vehicle body in a state where the air bag is inflated and deployed; a lower wall portion that connects the gas generator and a lower edge of the occupant contact potion in the vertical direction with respect to the vehicle body in a state where the air bag is inflated and deployed; and a gas flow path portion provided in each of the upper wall portion and the lower wall portion, the gas flow path portion allowing the gas generator and the occupant contact portion to communicate with each other.

With regard to this air bag system, the gas from the gas generator flows into the occupant contact portion through the gas flow path on the upper wall portion side, and through the gas flow path on the lower wall portion side. Thus, it is possible to inflate and deploy the air bag, in which the area surrounded by the pair of side wall portions, and the occupant contact portion is a cavity, in a balanced manner within a short period of time. In particular, by adopting the construction in which the air bag also includes the pair of gas supply ports, the gas flows into the air bag through the four gas inflow paths, so that it is possible to deploy the air bag within a shorter period of time.

In the air bag in the above air bag system, an outer fabric forming an outer surface of the air bag may be sewn or bonded to an inner fabric placed on the inside of the outer fabric along a periphery of the skeleton-forming portion, whereby the skeleton-forming portion is placed on an inside of the outer fabric.

With regard to this air bag system, the air bag is provided with the skeleton-forming portion along the surface thereof by sewing or bonding the inner fabric to the outer fabric on the inner side thereof, the outer fabric forming the outer surface of the air bag. Accordingly, the structure is simple as compared to the construction in which a tubular inner member forming a gas flow path solely is placed in the bag.

As described above, the air bag system according to the present invention makes it possible to reduce the volume of the air bag.

### BRIEF DESCRIPTION OF THE DRAWINGS

The foregoing and further objects, features and advantages of the invention will become apparent from the following description of preferred embodiments with reference to the accompanying drawings, wherein like numerals are used to represent like elements and wherein:
FIG. 1 is a perspective view of an air bag system according to a first embodiment of the present invention, in which a deployed air bag is seen through;
FIG. 2 is a sectional side view of the air bag system according to the first embodiment of the present invention in a state where the air bag is deployed in a vehicle body;
FIGS. 3A and 3B are diagrams showing the air bag system according to the first embodiment of present invention, wherein FIG. 3A is a perspective view showing an external appearance when the air bag is in a deployed state, and FIG. 3B is a rear view showing the inside of the air bag;
FIGS. 4A and 4B are diagrams showing the air bag constituting the air bag system according to the first embodiment of the present invention, wherein FIG. 4A is a plan view of a bag's inner layer, and FIG. 4B is a plan view of a bag's outer layer;
FIGS. 5A to 5C are diagrams showing a manufacturing process of the air bag constituting the air bag system according to the first embodiment of the present invention, wherein FIG. 5A is a perspective view showing a state of the bag's inner layer in which the bag's inner layer is bent, FIG. 5B is a perspective view showing a state of the bag's inner and outer layers before the bag's outer layer is laid on the bag's inner layer, and FIG 5C is a perspective view showing a state of the bag's inner and outer layers in which the bag's outer layer is sewn to the bag's inner layer;
FIG. 6 is a perspective view of an air bag system according to a second aspect of the
background, in which a deployed air bag is seen through;
FIG. 7 is a plan view of a bag's inner layer constituting the air bag system according to the second aspect of the background ; and
FIG 8 is a perspective view of an air bag system according to a comparative example relative to the embodiment of the present invention.

### DETAILED DESCRIPTION OF THE PREFERRED EMBODIMENTS

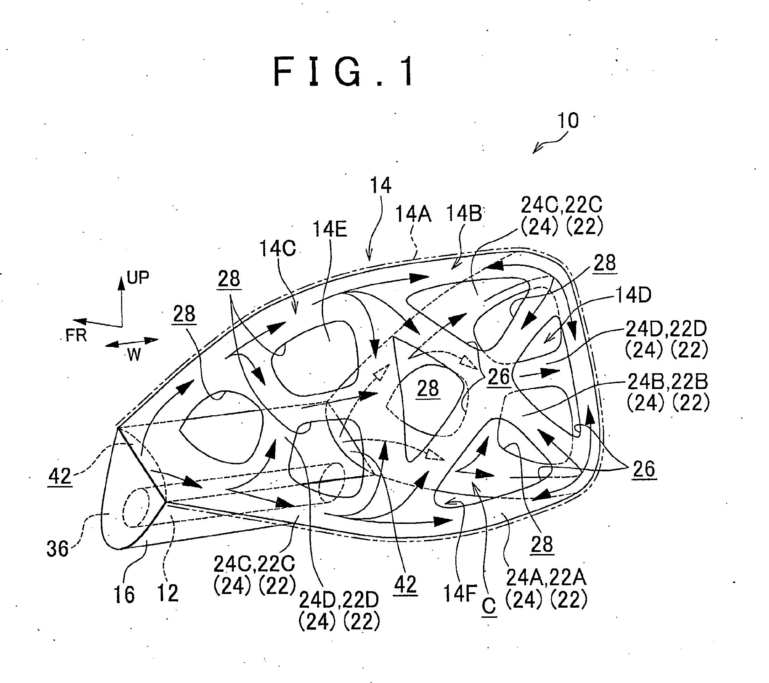

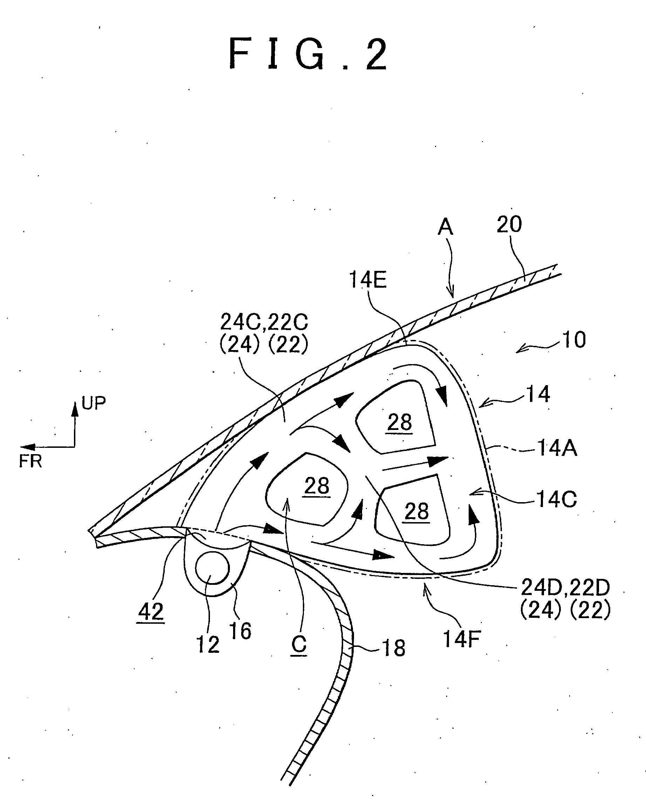

A passenger-side air bag system 10 as an air bag system according to a first embodiment of the present invention will be described with reference to FIGS. 1 and 2. The arrows FR, UP and W shown in the drawings indicate the front direction (the travel direction), the upward direction, and the width direction of an automobile A, respectively, in which the passenger-side air bag system 10 is installed.

FIG. 1 shows a perspective view of a general overall structure of the activated passenger-side air bag system 10. FIG. 2 shows a sectional side view of the general overall structure of the activated passenger-side air bag system 10. As shown in these figures, the passenger-side air bag system 10 includes, as main components: an inflator 12 as a gas generator; an air bag 14, which is inflated and deployed by the inflow of the gas generated by the inflator 12; and an air bag case 16, in which the inflator 12 and the air bag 14, which is folded, are accommodated.

The passenger-side air bag system 10, that is, the air bag case 16, in which the inflator 12 and the folded air bag 14 are accommodated, is disposed in an instrument panel 18 located in front of a passenger seat (not shown) as shown in FIG. 2. The passenger-side air bag system 10 is designed to restrain the head, the chest and the belly of the occupant on the passenger seat when the inflator 12 generates gas, causing the air bag 14 to be inflated and deployed between the instrument panel 18 and a front window glass 20, and to be extended over an upper rear portion of the instrument panel 18. A detailed description will be given below.

The inflator 12 accommodates an igniter, an ignition agent, a gas generating agent (an agent that burns to generate gas, or an agent that burns to open a passage through which compressed inert gas passes) etc. The inflator 12 is designed so that, when the igniter ignites the ignition agent, the gas generation agent burns to generate a large amount of gas. The inflator 12 adapted to the passenger-side air bag system 10 is designed so that, when an acceleration sensor detects a head-on collision of the automobile A and outputs a detection signal to an air-bag ECU (the sensor and the ECU are not shown), the air-bag ECU activates the igniter, which results in the ignition of the ignition agent.

As shown in FIG. 1, the air bag 14 is designed so that, when the gas generated by the inflator 12 flows into a tubular skeleton-forming portion 22 disposed on the inside of an outer sheet 14A indicated by the chain double-dashed line, a skeleton portion 24 (the inflated skeleton-forming portion 22 into which the gas has been filled) is formed to allow the air bag 14 to take an inflation, or deployment shape, in which the air bag 14 can restrain and hold the occupant (hereinafter, this state is referred to as the deployed state).

More specifically, the air bag 14 includes: an occupant contact portion 14B with which an occupant will come into contact, and faces the head, the chest and the belly of the occupant when the air bag 14 is in a deployed state; and a left-right pair of side wall portions 14C and 14D, with respect to the vehicle longitudinal direction, which are positioned between the air bag case 16 and the occupant contact portion 14B and are oriented in the vehicle width direction when the air bag 14 is in a deployed state. Front ends of the side wall portions 14C and 14D are fixedly held in the air bag case 16 at both ends thereof in the vehicle width direction. The structure of the deployed air bag 14 is such that the area surrounded by the occupant contact portion 14B, the side wall portions 14C and 14D, and the air bag case 16 is a cavity C to which the gas generated by the inflator 12 is not supplied.

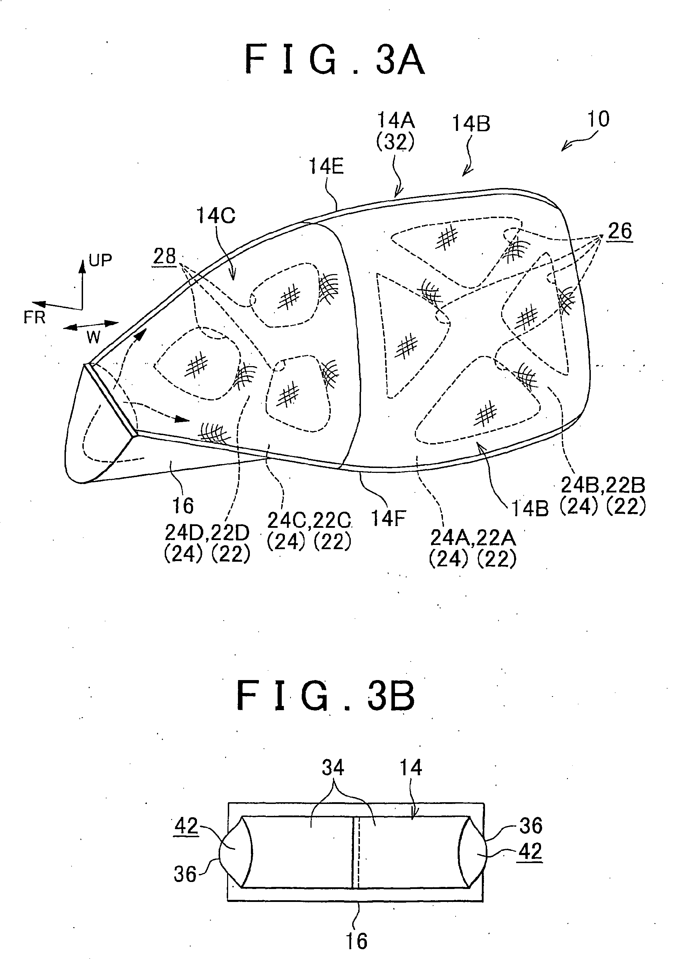

The occupant contact portion 14B is formed so that the sides thereof form a substantially rectangular shape in which each side extends in a substantially vertical direction with respect to the vehicle body or in the vehicle width direction when viewed from the rear when the air bag 14 is in a deployed state. The occupant contact portion 14B includes: a frame-like skeleton-forming portion 22A that forms a frame-like skeleton portion 24A that has a rectangular frame shape each side of which lies along the periphery of the rectangular shape when the air bag 14 is in a deployed state; and a lattice-like skeleton-forming portion 22B that forms an X-shaped lattice-like skeleton portion 24B, extending along the length of diagonal lines of the frame-like skeleton portion 24A when the air bag 14 is in a deployed state. As shown in FIG. 3A, four windows 26 that are formed in the occupant contact portion 14B in a deployed state, and have a substantially triangular shape, are closed by the outer sheet 14A.

The side walls 14C and 14D are formed so that a substantially triangular shape (trapezoidal shape), of which the vertex portion is positioned on the air bag case 16 side when viewed from the side when the air bag 14 is in a deployed state, is formed. Each of the side wall portions 14C and 14D includes: a frame-like skeleton-forming portion 22C that forms a frame-like skeleton portion 24C that has a frame shape each side of which lies along the periphery of the triangular shape when the air bag 14 is in a deployed state; and a lattice-like skeleton-forming portion 22D that forms a lattice-like skeleton portion 24D extending from the middle portion of each of the three sides of the frame-like skeleton portion 24C and gathering at the center of the frame-like skeleton portion 24C when the air bag 14 is in a deployed state. The rear sides of the left and right frame-like skeleton-forming portions 22C (frame-like skeleton portions 24C), with respect to the vehicle longitudinal direction, are united with the sides of the frame-like skeleton portion 24A at both edges thereof in the vehicle width direction. As shown in FIG. 3A, three windows 28 that are formed in each of the side wall portions 14C and 14D in a deployed state, and have a substantially rectangular shape, are closed by the outer sheet 14A.

As described above, the passenger-side air bag system 10 is designed so that, when the gas from the inflator 12 flows into the tubular skeleton-forming portions 22A to 22D as shown by the arrows in FIG. 1, the skeleton portions 24A to 24D are formed such that a lattice is formed in a frame, and thus, the air bag 14 is deployed so that the whole of the air bag 14, that is, the occupant contact portion 14B, the left-right pair of side wall portions 14C and 14D, with respect to the vehicle longitudinal direction, and the air bag case 16 define the cavity C.

In this embodiment, the air bag 14 includes: an upper wall portion 14E, which covers the cavity C from above; and a lower wall portion 14F, which covers the cavity C from below. However, the air bag 14 may be such that the upper wall portion 14E and the lower wall portion 14F are not included.

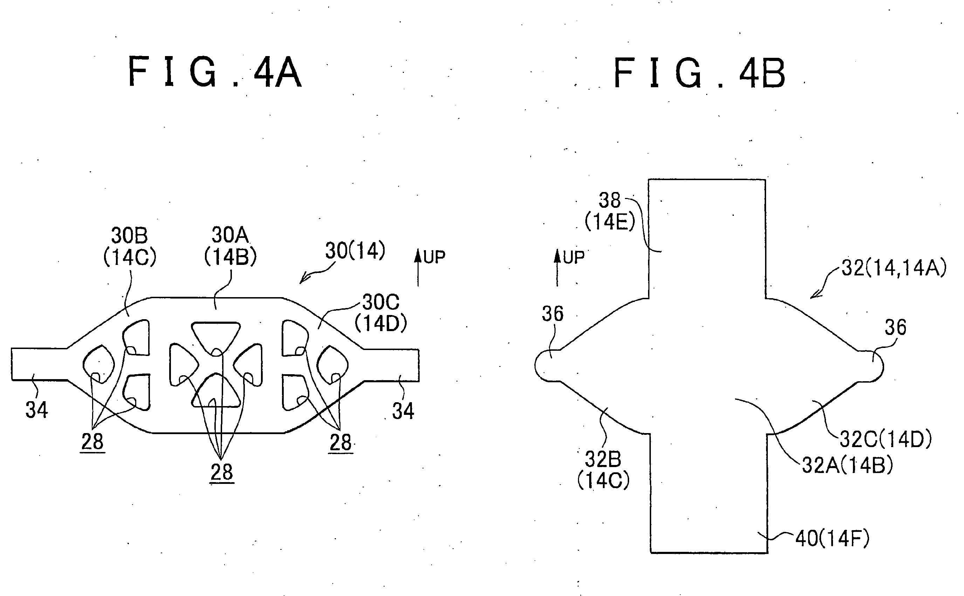

The above-described air bag 14 is made by laying a bag's inner layer 30 as the inner fabric shown in FIG. 4A on a bag's outer layer 32 as the outer fabric shown in FIG. 4B, and sewing predetermined portions thereof together.

The bag's inner layer 30 has triangular side portions 30B and 30C, which form the side wall portions 14C and 14D, extended from both sides of a rectangular center portion 30A, which forms the occupant contact portion 14B. Four windows 26 are provided in the rectangular center portion 30A by cutting away the corresponding portions. Three windows 28 are provided in each of the side portions 30B and 30C by cutting away the corresponding portions. A rectangular portion 34 to be held by the air bag case 16 is extended from the edge of each of the side portions 30B and 30C of the bag's inner layer 30 on the side opposite to the center portion 30A.

The bag's outer layer 32 has triangular side portions 32B and 32C, which form the side wall portions 14C and 14D, extended from both sides of a rectangular center portion 32A, which forms the occupant contact portion 14B. An ear portion 36 is extended from the edge of each of the side portions 32B and 32C of the bag's outer layer 32 on the side opposite to the center portion 32A. In addition, an upper wall forming portion 38 that forms the upper wall portion 14E, and a lower wall forming portion 40 that forms the lower wall portion 14F are extended from the upper and lower edges of the center portion 32A, respectively.

The air bag 14 that is provided with the skeleton-forming portion 22 on the inside of the outer sheet 14A constituted of the bag's outer layer 32 as shown in FIG. 3A is formed by laying the bag's inner layer 30 on the bag's outer layer 32 so that the center portion 30A and the side portions 30B and 30C coincide with the center portion 32A and the side portions 32B and 32C, respectively, sewing the peripheries thereof together all around except the portions from each of which the held-by-case portion 34 or the ear portion 36 is extended, and sewing the edge portions around the windows 26 and 28 together all around each window. The bag's inner layer 30 may be prepared without cutting away the portions corresponding to the windows 26 and 28.

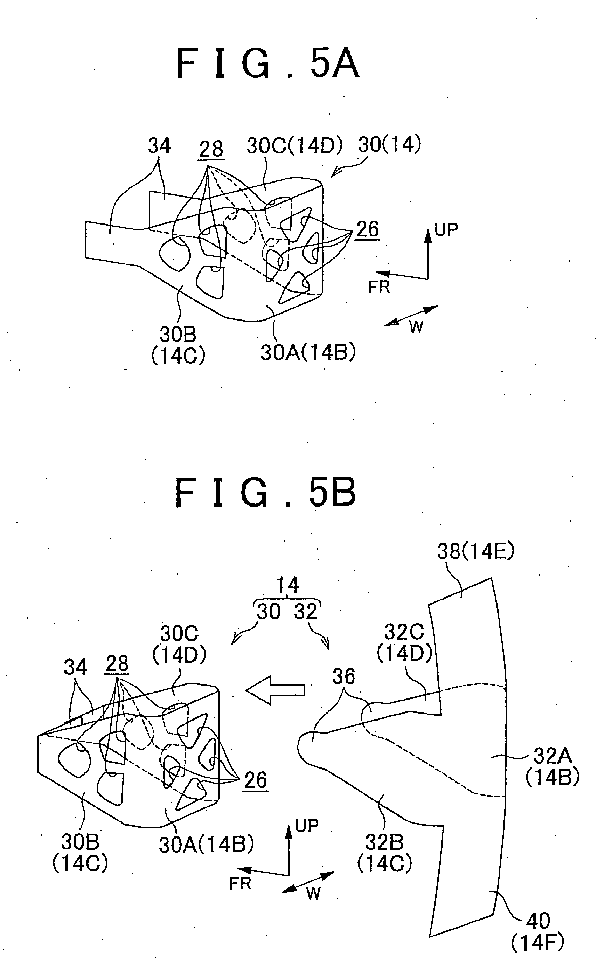

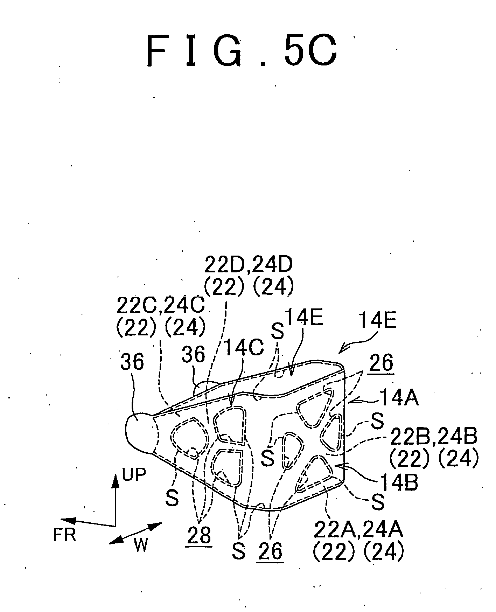

A manufacturing process of the air bag 14 will be described with reference to FIGS. 5A to 5C. First, the bag's inner layer 30 is bent so that the held-by-case portions 34 come close to each other as shown in FIG. 5A, and then, the end portions of the rectangular held-by-case portions 34 are sewn together as shown in FIG. 5B. Thereafter, the bag's outer layer 32 is laid on the bent bag's inner layer 30 from the outside (convex side), and the peripheries of the bag's inner layer 30 and the bag's outer layer 32 are sewn together all around except the portions from each of which the held-by-case portion 34 or the ear portion 36 is extended, and the edge portions around the windows 26 and 28 are sewn together all around each window, as shown in FIG. 5C as the sewn portions S. In this embodiment, sewing of the side edge portions of the upper wall forming portion 38 and the lower wall forming portion 40 is performed concurrently with sewing the side portions 30B and 32B together, and the side portions 30C and 32C together.

With respect to the air bag 14 thus manufactured, the held-by-case portions 34 joined to each other are fixed to the air bag case 16, and the ear portions 36 are fixed to the air bag case 16 so that gas supply ports 42 are formed between each end portion of the held-by-case, portion 34 in the vehicle width direction and the corresponding ear portion 36. Each of the gas supply ports 42 communicates with the gas discharging part of the inflator 12, so that the gas from the inflator 12 can be introduced into the skeleton-forming portion 22 in the side wall portions 14C and 14D of the air bag 14.

In a state where the air bag 14 is fixed to the air bag case 16, the air bag 14 is accommodated in the air bag case 16 in an appropriately folded state.

A description will be given below of operations of the first embodiment.

With regard to the passenger-side air bag system 10 having the above-described construction, when the automobile A in which the passenger-side air bag system 10 is installed has a head-on collision, the air-bag ECU activates the inflator 12 to generate gas. This gas flows into the air bag 14 through the gas supply ports 42, and is filled into the occupant contact portion 14B through the left and right side wall portions 14C and 14D, with respect to the vehicle longitudinal direction. Then, the occupant contact portion 14B that is deployed with the frame-like skeleton portion 24A and the lattice-like skeleton portion 24B serving as the skeleton, and the left and right side wall portions 14C and 14D, with respect to the vehicle longitudinal direction, that are deployed with the frame-like skeleton portion 24C and the skeleton portion 24D serving as the skeleton spread out the upper wall portion 14E and the lower wall portion 14F, whereby the air bag 14 is inflated and deployed into such a bag shape that the cavity C is surrounded, when viewed as a whole.

The air bag 14 inflated and deployed comes into contact with the head, the chest and the belly of the passenger-seat occupant whose upper body is restrained by the seat belt, and restrains the upper body of the occupant in an auxiliary manner. Thus, the passenger-side air bag system 10 and the seat belt system effectively protect the passenger-seat occupant at the time of the head-on collision of the automobile A.

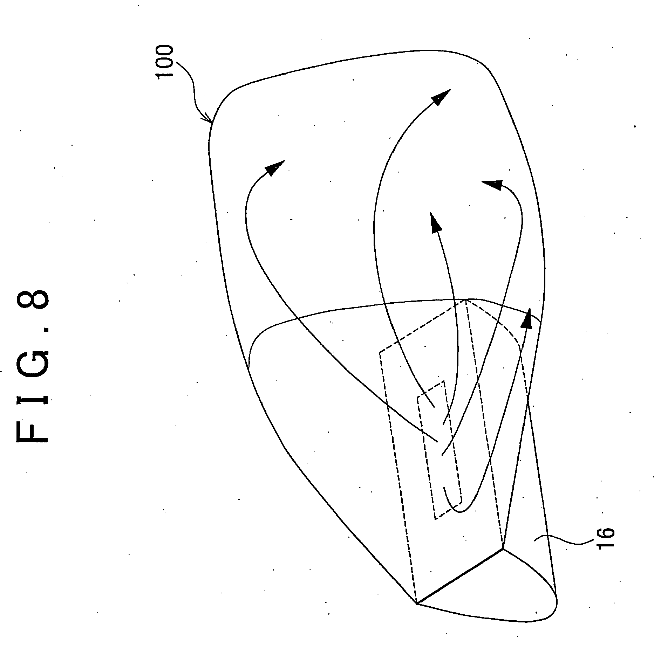

Because the construction of the passenger-side air bag system 10 is such that the air bag 14 is inflated and deployed by filling gas into the tubular skeleton-forming portion 22, it is possible to deploy the air bag 14 with a small amount of gas. More specifically, the air bag 14 that does not need to fill the cavity C with gas has achieved significant volume reduction (reduction in the amount of gas to be used), as compared to a construction such that a sack-like air bag 100 is inflated and deployed by filling the bag with gas as shown in FIG. 8 as a comparative example. In particular, in the passenger-side air bag system 10 that is required to have a large volume when the air bag is in a deployed state because there is a large space in front of the occupant, the volume reduction of the air bag 14 has been achieved.

In the passenger-side air bag system 10, the tubular skeleton-forming portion 22 is formed along the outer sheet 14A of the air bag 14, and more specifically, the outer wall portions of the air bag 14 (the occupant contact portion 14B, the left and right side wall portions 14C and 14D) that are integral with the outer sheet 14A are formed by the skeleton portion 24, and serve as strengthening portions for maintaining the deployment form. As a result, even when compared to the air bag in which tubular strengthening portions (skeleton portions as column portions or beam portions) are disposed in the cavity C, it is possible to reduce the volume of the air bag 14.

In addition, because, in the deployed occupant contact portion 14B of the passenger-side air bag system 10, the lattice-like skeleton portion 24B is positioned in the frame-like skeleton portion 24A, it is possible to effectively restrain the occupant with the use of a skeleton structure.

Moreover, because, in the passenger-side air bag system 10, two gas supply ports 42 are provided, corresponding to the left and right side wall portions 14C and 14D, with respect to the vehicle longitudinal direction, it is possible to supply gas from the inflator 12 symmetrically, and quickly deploy the air bag 14 through a balanced change in form.

Furthermore, because, in the passenger-side air bag system 10, the air bag 14 having the skeleton-forming portion 22 is made by sewing the bag's inner layer 30 and the bag's outer layer 32 together, it is possible to obtain the simply-structured and volume-reduced air bag 14.

Next, a second aspect of the background will be described. Basically the same parts or portions as those of the first embodiment will be indicated by the same reference letters as those of the first embodiment, and the description thereof will be omitted.

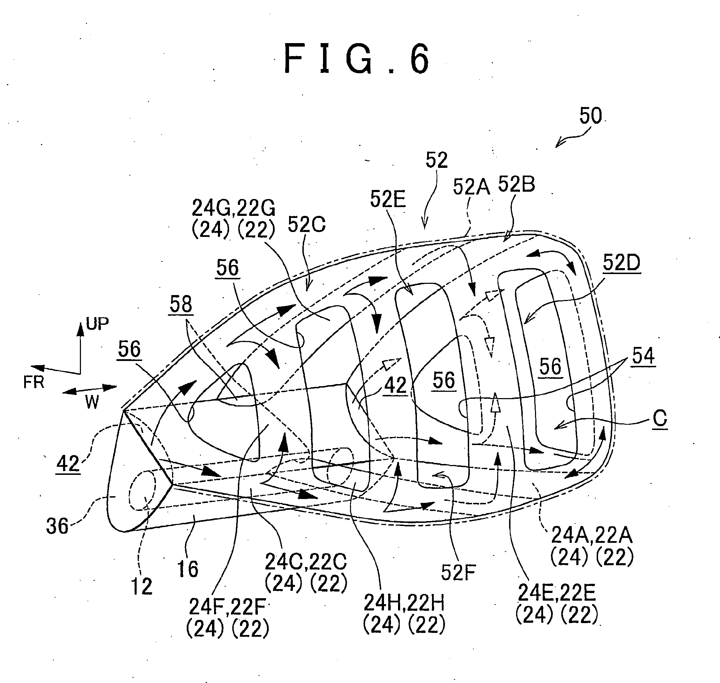

FIG. 6 shows a perspective view of a general overall structure of an activated passenger-side air bag system 50 according to the second aspect. As shown in FIG 6, the passenger-side air bag system 50 differs from the passenger-side air bag system 10 in being provided with an air bag 52, instead of the air bag 14.

The air bag 52 includes an outer sheet 52A, an occupant contact portion 52B, side wall portions 52C and 52D, an upper wall portion 52E and a lower wall portion 52F, corresponding to the outer sheet 14A, the occupant contact portion 14B, the side wall portions 14C and 14D, the upper wall portion 14E and the lower wall portion 14F of the first embodiment, respectively.

In the occupant contact portion 52B, a columnar skeleton-forming portion 22E that forms a columnar skeleton portion 24E connecting upper and lower edges of a frame-like skeleton portion 24A at the midpoints thereof in the vehicle width direction in a state where the air bag 52 is deployed, is disposed in a frame-like skeleton-forming portion 22A that forms the frame-like skeleton portion 24A when the air bag 52 is in a deployed state. Windows 54 formed in the occupant contact portion 52B so that the columnar skeleton-forming portion 22E is interposed therebetween, are closed by the outer sheet 52A.

In each of the wall portions 52C and 52D, a columnar skeleton-forming portion 22F that forms a columnar skeleton portion 24F connecting upper and lower edges of a frame-like skeleton portion 24C at the midpoints thereof in the vehicle longitudinal direction in a state where the air bag 52 is deployed, is disposed in a frame-like skeleton-forming portion 22C that forms the frame-like skeleton portion 24C when the air bag 52 is in a deployed state. Windows 56 formed in each of the wall portions 52C and 52D so that the columnar skeleton-forming portion 22F is interposed therebetween, are closed by the outer sheet 52A.

The upper wall portion 52E includes a beam-like skeleton-forming portion 22G that forms a beam-like skeleton portion 24G extending in the vehicle longitudinal direction in the middle of the upper wall portion 52E in the vehicle width direction, and allowing an air bag case 16 and the occupant contact portion 52B (the upper edge portion of the frame-like skeleton portion 24A) to communicate with each other when the air bag 52 is in a deployed state, and that serves as a gas flow path. Similarly, the lower wall portion 52F includes a beam-like skeleton-forming portion 22H that forms a beam-like skeleton portion 24H extending in the vehicle longitudinal direction in the middle of the lower wall portion 52F in the vehicle width direction, and allowing the air bag case 16 and the occupant contact portion 52B (the lower edge portion of the frame-like skeleton portion 24A) to communicate with each other when the air bag 52 is in a deployed state, and that serves as a gas flow path.

Each of the front ends of the beam-like skeleton portions 24G and 24H is fixed to the air bag case 16, and serves as a gas supply port 58 that communicates with the gas discharging part of the inflator 12. The beam-like skeleton portions 24G and 24H may be taken not as the skeleton portion of the present invention but as merely a gas supply path.

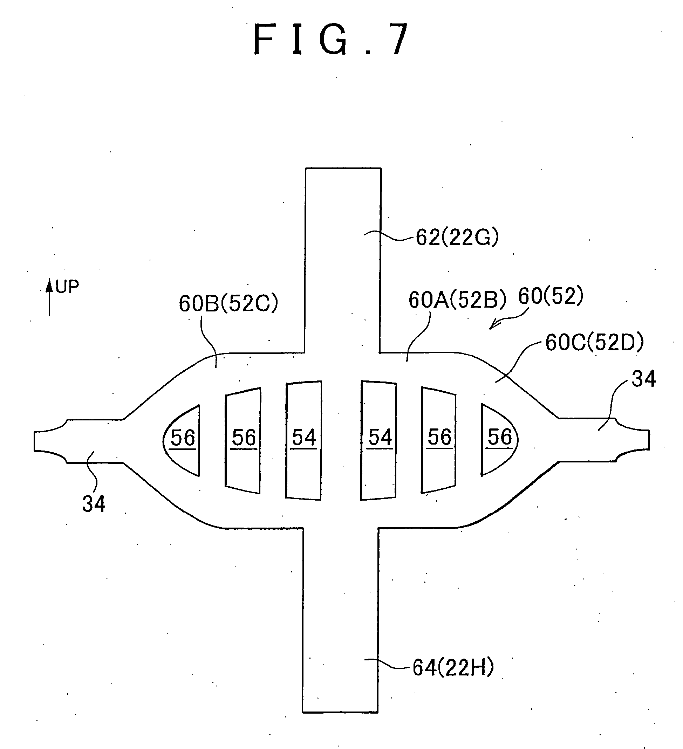

The air bag 52 is made by laying a bag's inner layer 60 shown in FIG. 7 on a bag's outer layer 32 shown in FIG. 4B, and sewing predetermined portions thereof together. The bag's inner layer 60 constituting the air bag 52 has a center portion 60A to be laid on a center portion 32A of the bag's outer layer 32, and side portions 60B and 60C to be laid on side portions 32B and 32C of the bag's outer layer 32, respectively. The air bag 52 that is provided with the skeleton-forming portion 22 on the inside of the outer sheet 52A constituted of the bag's outer layer 32 is formed by laying the bag's inner layer 60 on the bag's outer layer 32 so that the center portion 60A and the side portions 60B and 60C coincide with the center portion 32A and the side portions 32B and 32C, respectively, sewing the peripheries thereof together all around except the portions from each of which a held-by-case portion 34 or an ear portion 36 is extended, and sewing the edge portions around the windows 54 and 56 together all around each window. The bag's inner layer 60 may be prepared without cutting away the portions corresponding to the windows 54 and 56.

Band portions 62 and 64 are extended from upper and lower edges of the center portion 60A of the bag's inner layer 60 in the middle thereof in the vehicle width direction. The band portion 62 forms the beam-like skeleton-forming portion 22G after both edges of the band portion 62 in the vehicle width direction are sewn to an upper wall forming portion 38 of the bag's outer layer 32. The band portion 64 forms the beam-like skeleton-forming portion 22H after both edges of the band portion 64 in the vehicle width direction are sewn to a lower wall forming portion 40 of the bag's outer layer 32.

As in the case of the passenger-side air bag system 10, at the time of the head-on collision of the automobile A, the above-described passenger-side air bag system 50 deploys the air bag 52, thereby restraining and protecting the occupant on the passenger seat. Because the passenger-side air bag system 50 is constructed so that the air bag 14 is inflated and deployed by filling the tubular skeleton-forming portion 22 with gas, it is possible to obtain effects similar to those of the first embodiment, such as the volume reduction of the air bag 52, due to similar operations.

In the passenger-side air bag system 50, because the portions extending in a substantially vertical direction with respect to the vehicle body, which are the columnar skeleton-forming portions 22E skeleton-forming and 22F, the frame-like skeleton-forming portions 22A and skeleton-forming22C, are arranged in a vertical stripe pattern, the gas inflow path is simple. As a result, it is easy to manufacture the air bag 52, and it is possible to deploy the air bag 52 within a short period of time. In particular, in the passenger-side air bag system 50, four gas supply ports 42 and 58 are provided in the air bag 52, so that it is possible to deploy the air bag 52 within a shorter period of time.

Although the above-described embodiment shows an example in which the present invention is applied to the passenger-side air bag systems 10 and 50, the present invention is not limited to this embodiment However, the present invention can be applied to air bag systems used for protection at the time of a side-impact collision, such as side air bags and curtain air bags, various, occupant protecting air bag systems, such as driver-side air bags, rear-seat air bags and knee air bags, and pedestrian protecting air bag systems, such as hood air bags and pillar air bags, for example. Accordingly, the shape of the air bags is not limited to the shape similar to those of the air bags 14 and 52 in which the cavity C is formed. The shape may be appropriately changed depending on the application.

In addition, although the above-described embodiment shows an example in which the air bag 14 or 52 is made by sewing the bag's outer layer 32 and the bag's inner layer 30 or the bag's inner layer 60 together, however, the present invention is not limited to these embodiments. The air bag 14 or 52 may be made by bonding the bag's outer layer 32 and the bag's inner layer 30 or the bag's inner layer 60 together.

## Claims

1. An air bag system including a gas generator (12) that is activated to generate gas at a predetermined moment, and an air bag (14) that is inflated and deployed by the gas supplied from the gas generator (12), wherein
the air bag (14) has a tubular skeleton-forming portion (22) that is placed in the air bag (14), and that is inflated by the gas supplied from the gas generator (12) to form a skeleton portion (24),
the air bag (14) is inflated and deployed in front of an occupant in terms of the front and the rear of the vehicle body, and
the air bag (14) includes an occupant contact portion (14B) that is deployed toward the occupant when the skeleton-forming portion (22) placed on an inside of the air bag (14) is inflated to form a skeleton portion (24A) that has a rectangular shape, **characterized in that**
the skeleton-forming portion (22) further comprises a skeleton portion (24B) that has an X shape and extends along the length of diagonal lines of the rectangular skeleton portion (24A), and
the air bag (14) includes a pair of side wall portions (14C, 14D) that are deployed between the gas generator (12) and each edge of the occupant contact portion (14B) in the vehicle width direction when the skeleton-forming portion (22) placed on the inside of the air bag (14) is inflated to form the skeleton portion (24C) that has a substantially triangular shape, and the skeleton portion (24D) that extends from a middle portion of each of three sides of the triangular skeleton portion (24C) and gathers at a center of the triangular skeleton portion (24C) in a three-pronged shape.

2. The air bag system according to Claim 1, wherein the air bag (14) having the skeleton-forming portion (22) is made by laying a bag's inner layer (30) on a bag's
outer layer (32) so that a center portion (30A) and side portions (30B, 30C) of the bag's inner layer (32) coincide with a center portion (32A) and side portions (32B, 32C) of the bag's outer layer (32), and by sewing the bag's inner layer (30) and the bag's outer layer (32) at their center portions (30A, 32A) together so as to form the skeleton portion (24A) having the rectangular shape and the skeleton portion (24B) having the X shape.

3. The air bag system according to Claim 1, wherein arms of the skeleton portion (24B) of the occupant contact portion (14B) are communicated with each other via the interconnection of the skeleton portion (24B) of the occupant contact portion (14B).

4. The air bag system according to Claim 1, wherein the rear sides of the left and right side walls portions (14C, 14D; 52C, 52D), with respect to the vehicle longitudinal direction, are united with the sides of the occupant contact portion (14B; 52B) at both edges thereof in the vehicle width direction.

5. The air bag system according to Claim 1, wherein the skeleton portion (24A) of the occupant contact portion (14B; 52B) is communicated to the skeleton portion (24C) of the pair of side wall portions (14C, 14D; 52C, 52D) so as to form a gas supply path of the gas supplied from the gas generator (12).

6. The air bag system according to Claim 1, wherein the skeleton-forming portion (22) is placed along a surface of the air bag (14, 52).

7. The air bag system according to Claim 1, wherein the air bag (14, 52) includes a pair of gas supply ports (42) allowing the pair of side wall portions (14C, 14D) to communicate with the gas generator (12) individually.

8. The air bag system according to Claim 1, wherein the air bag (14, 52) includes:
an upper wall portion (14E, 52E) that connects the gas generator (12) and an upper edge of the occupant contact portion (14B, 52B) in a vertical direction with respect to the vehicle body in a state where the air bag is inflated and deployed;
a lower wall portion (14F, 52F) that connects the gas generator (12) and a lower edge of the occupant contact portion (14B, 52B) in the vertical direction with respect to the vehicle body in a state where the air bag (14, 52) is inflated and deployed; and
a gas flow path portion (58) provided in each of the upper wall portion (14E, 52E) and the lower wall portion (14F, 52F), the gas flow path portion allowing the gas generator (12) and the occupant contact portion (14B, 52B) to communicate with each other.

9. The air bag system according to Claim 1, wherein, in the air bag (14, 52), an outer fabric (32) forming an outer surface of the air bag (14, 52) is sewn or bonded to an inner fabric (30) placed on the inside of the outer fabric (32) along a periphery of the skeleton-forming portion (22), whereby the skeleton-forming portion (22) is placed on an inside of the outer fabric (32).

## Patentansprüche

1. Airbagsystem mit einem Gasgenerator (12), der zu einem vorbestimmten Moment zur Erzeugung von Gas aktiviert wird, und einem Airbag (14), der durch das von dem Gasgenerator (12) zugeführte Gas aufgeblasen und entfaltet wird, wobei
der Airbag (14) einen rohrförmigen, Skelett bildenden Abschnitt (22) aufweist, der in dem Airbag (14) angeordnet ist und der durch das von dem Gasgenerator (12) zugeführte Gas aufgeblasen wird, um einen Skelettabschnitt (24) zu bilden,
der Airbag (14) in Längsrichtung der Fahrzeugkarosserie vor einem Insassen aufgeblasen und entfaltet wird, und
der Airbag (14) einen Insassenkontaktabschnitt (14B) aufweist, der zum Insassen hin entfaltet wird, wenn der innerhalb des Airbags (14) angeordnete Skelett bildende Abschnitt (22) aufgeblasen wird, um einen rechteckförmigen Skelettabschnitt (24A) zu bilden, **dadurch gekennzeichnet, dass**
der Skelett bildende Abschnitt (22) ferner einen X-förmigen Skelettabschnitt (24B) aufweist, der sich entlang der Diagonalen des rechteckigen Skelettabschnitts (24A) erstreckt, und
der Airbag (14) ein Paar von Seitenwandabschnitten (14C, 14D) aufweist, die zwischen dem Gasgenerator (12) und jeder Kante des Insassenkontaktabschnitts (14B) in Fahrzeugquerrichtung entfaltet werden, wenn der innerhalb des Airbags (14) angeordnete Skelett bildende Abschnitt (22) aufgeblasen wird, um einen im Wesentlichen dreieckförmigen Skelettabschnitt (24C) und einen Skelettabschnitt (24D), der sich von einem Mittelabschnitt von jedem der drei Seiten des dreieckigen Skelettabschnitts (24C) erstreckt und in der Mitte des dreieckigen Skelettabschnitts (24C) von drei Seiten zusammentrifft, zu bilden.

2. Airbagsystem gemäß Anspruch 1, wobei der Airbag (14), der den Skelett bildenden Abschnitt (22) hat, hergestellt wird, indem eine Airbaginnenschicht (30) auf eine Airbagaußenschicht (32) so gelegt wird, dass ein Mittelabschnitt (30A) und Seitenabschnitte (30B, 30C) der Airbaginnenschicht (30) zusammen mit einem Mittelabschnitt (32A) und Seitenabschnitten (32B, 32C) der Airbagaußenschicht (32) zusammenfallen, und indem die Airbaginnenschicht (30) und die Airbagaußenschicht (32) an ihren Mittelabschnitten (30A, 32A) zusammengenäht werden, so dass sie den rechteckförmigen Skelettabschnitt (24A) und den X-förmigen Skelettabschnitt (24B) bilden.

3. Airbagsystem gemäß Anspruch 1, wobei Arme des Skelettabschnitts (24B) des Insassenkontaktabschnitts (14B) über die Verbindung des Skelettabschnitts (24B) des Insassenkontaktabschnitts (14B) miteinander in Verbindung stehen.

4. Airbagsystem gemäß Anspruch 1, wobei die Rückseiten der linken und rechten Seitenwandabschnitte (14C, 14D; 52C, 52D) bezüglich der Fahrzeuglängsrichtung an ihren beiden Kanten in Fahrzeugquerrichtung mit den Seiten des Insassenkontaktabschnitts (14B; 52B) verbunden sind.

5. Airbagsystem gemäß Anspruch 1, wobei der Skelettabschnitt (24A) des Insassenkontaktabschnitts (14B; 52B) mit dem Skelettabschnitt (24C) des Paars von Seitenwandabschnitten (14C, 14D; 52C, 52D) so in Verbindung steht, dass ein Gaszuführpfad des von dem Gasgenerator (12) zugeführten Gases gebildet wird.

6. Airbagsystem gemäß Anspruch 1, wobei der Skelett bildende Abschnitt (22) entlang einer Oberfläche des Airbags (14, 52) angeordnet ist.

7. Airbagsystem gemäß Anspruch 1, wobei der Airbag (14, 52) ein Paar von Gaszuführöffnungen (42) aufweist, die ermöglichen, dass die beiden Seitenwandabschnitte (14C, 14D) jeweils mit dem Gasgenerator (12) in Verbindung stehen.

8. Airbagsystem gemäß Anspruch 1, wobei der Airbag (14, 52) aufweist:
einen oberen Wandabschnitt (14E, 52E), der den Gasgenerator (12) und eine in vertikaler Richtung bezüglich der Fahrzeugkarosserie obere Kante des Insassenkontaktabschnitts (14B, 52B) verbindet, wenn der Airbag aufgeblasen und entfaltet ist;
einen unteren Wandabschnitt (14F, 52F), der den Gasgenerator (12) und eine in vertikaler Richtung bezüglich der Fahrzeugkarosserie untere Kante des Insassenkontaktabschnitts (14B, 52B) verbindet, wenn der Airbag (14, 52) aufgeblasen und entfaltet ist; und
einen Gasströmungspfadabschnitt (58), der in dem oberen Wandabschnitt (14E, 52E) und dem unteren Wandabschnitt (14F, 52F) vorgesehen ist und erlaubt, dass der Gasgenerator (12) und der Insassenkontaktabschnitt (14B, 52B) miteinander in Verbindung stehen.

9. Airbagsystem gemäß Anspruch 1, wobei in dem Airbag (14, 52) ein äußerer Stoff (32), der eine Außenfläche des Airbags (14, 52) bildet, mit einem inneren Stoff (30), der an der Innenseite des äußeren Stoffs (32) angeordnet ist, entlang eines Umfangs des Skelett bildenden Abschnitts (22) vernäht oder verbunden ist, wodurch der Skelett bildende Abschnitt (22) an einer Innenseite des äußeren Stoffs (32) angeordnet wird.

## Revendications

1. Système de coussin de sécurité gonflable comprenant un générateur de gaz (12) qui est activé pour générer du gaz à un moment prédéterminé et un coussin de sécurité gonflable (14) qui est gonflé et déployé par le gaz alimenté à partir du générateur de gaz (12), dans lequel :
le coussin de sécurité gonflable (14) a une partie de formation de squelette tubulaire (22) qui est placée dans le coussin de sécurité gonflable (14) et qui est gonflée par le gaz alimenté à partir du générateur de gaz (12) pour former une partie de squelette (24),
le coussin de sécurité gonflable (14) est gonflé et déployé en face d'un occupant, en termes d'avant et d'arrière du corps de véhicule, et
le coussin de sécurité gonflable (14) comprend une partie de contact d'occupant (14B) qui est déployée vers l'occupant lorsque la partie de formation de squelette (22) placée sur un intérieur du coussin de sécurité gonflable (14) est gonflée afin de former une partie de squelette (24A) qui a une forme rectangulaire, **caractérisé en ce que** :
la partie de formation de squelette (22) comprend en outre une partie de squelette (24B) qui a une forme de X et s'étend le long de la longueur des lignes diagonales de la partie de squelette rectangulaire (24A), et
le coussin de sécurité gonflable (14) comprend une paire de parties de paroi latérale (14C, 14D) qui sont déployées entre le générateur de gaz (12) et chaque bord de la partie de contact d'occupant (14B) dans le sens de la largeur du véhicule lorsque la partie de formation de squelette (22) placée sur l'intérieur du coussin de sécurité gonflable (14) est gonflée pour former la partie de squelette(24C) qui a une forme sensiblement triangulaire et la partie de squelette(24D) qui s'étend à partir d'une partie centrale de chacun des trois côtés de la partie de squelette triangulaire (24C) et se regroupe au centre de la partie de squelette triangulaire (24C) selon une forme à trois dents.

2. Système de coussin de sécurité gonflable selon la revendication 1, dans lequel le coussin de sécurité gonflable (14) ayant une partie de formation de squelette (22) est réalisé en posant une couche interne (30) du coussin de sécurité sur une couche externe (32) du coussin de sécurité, de sorte qu'une partie centrale (30A) et les parties latérales (30B, 30C) de la couche interne (32) du coussin de sécurité coïncident avec une partie centrale (32A) et les parties latérales (32B, 32C) de la couche externe (32) du coussin de sécurité, et en cousant la couche interne (30) du coussin de sécurité et la couche externe (32) du coussin de sécurité au niveau de leurs parties centrales (30A, 32A) ensemble afin de former la partie de squelette (24A) ayant la forme rectangulaire et la partie de squelette (24B) ayant la forme de X.

3. Système de coussin de sécurité gonflable selon la revendication 1, dans lequel les bras de la partie de squelette (24B) de la partie de contact d'occupant (14B) communiquent entre eux via l'interconnexion de la partie de squelette (24B) de la partie de contact d'occupant (14B).

4. Système de coussin de sécurité gonflable selon la revendication 1, dans lequel les côtés arrière des parties de paroi latérale gauche et droite (14C, 14D ; 52C, 52D) par rapport à la direction longitudinale du véhicule, sont assemblés avec les côtés de la partie de contact d'occupant (14B ; 52B) au niveau de leurs deux bords dans le sens de la largeur du véhicule.

5. Système de coussin de sécurité gonflable selon la revendication 1, dans lequel la partie de squelette (24A) de la partie de contact d'occupant (14B ; 52B) communique avec la partie de squelette (24C) de la paire de parties de paroi latérale (14C, 14D ; 52C, 52D) afin de former une trajectoire d'alimentation de gaz du gaz alimenté à partir du générateur de gaz (12).

6. Système de coussin de sécurité gonflable selon la revendication 1, dans lequel la partie de formation de squelette (22) est placée le long d'une surface du coussin de sécurité gonflable (14, 52).

7. Système de coussin de sécurité gonflable selon la revendication 1, dans lequel le coussin de sécurité gonflable (14, 52) comprend une paire d'orifices d'alimentation de gaz (42) permettant à la paire de parties de paroi latérale (14C, 14D) de communiquer avec le générateur de gaz (12) de manière individuelle.

8. Système de coussin de sécurité gonflable selon la revendication 1, dans lequel le coussin de sécurité gonflable (14, 52) comprend :
une partie de paroi supérieure (14E, 52E) qui raccorde le générateur de gaz (12) et un bord supérieur de la partie de contact d'occupant (14B, 52B) dans une direction verticale par rapport au corps du véhicule dans un état dans lequel le coussin de sécurité gonflable est gonflé et déployé ;
une partie de paroi inférieure (14F, 52F) qui raccorde le générateur de gaz (12) et un bord inférieur de la partie de contact d'occupant (14B, 52B) dans la direction verticale par rapport au corps de véhicule, dans un état dans lequel le coussin de sécurité gonflable (14, 52) est gonflé et déployé ; et
une partie de trajectoire d'écoulement de gaz (58) prévue dans chacune parmi la partie de paroi supérieure (14E, 52E) et la partie de paroi inférieure (14F, 52F), la partie de trajectoire d'écoulement de gaz permettant au générateur de gaz (12) et à la partie de contact d'occupant (14B, 52B) de communiquer entre elles.

9. Système de coussin de sécurité gonflable selon la revendication 1, dans lequel, dans le coussin de sécurité gonflable (14, 52), un tissu extérieur (32) formant une surface extérieure du coussin de sécurité gonflable (14, 52) est cousu ou collé sur un tissu intérieur (30) placé à l'intérieur du tissu extérieur (32) le long d'une périphérie de la partie de formation de squelette (22), moyennant quoi la partie de formation de squelette (22) est placée à l'intérieur du tissu extérieur (32).
